# EUROPÄISCHE PATENTSCHRIFT

(11) **EP 3 940 544 B1**
(45) Veröffentlichungstag und Bekanntmachung des Hinweises auf die Patenterteilung: **28.01.2026**
(21) Anmeldenummer: 20185838.8
(22) Anmeldetag: 14.07.2020
(51) Int. Cl.: G06F 13/24

(54) **VERFAHREN ZUR DATENÜBERTRAGUNG UND SCHALTUNGSANORDNUNG DAFÜR**
DATA TRANSMISSION METHOD AND CIRCUIT ASSEMBLY FOR SAME
PROCÉDÉ DE TRANSFERT DE DONNÉES ET AGENCEMENT DE CIRCUIT ASSOCIÉ

(43) Veröffentlichungstag der Anmeldung: 19.01.2022
(73) Patentinhaber: VEGA Grieshaber KG, 77709 Wolfach (DE)
(72) Erfinder: MOSER, Patrick, 77960 Seelbach (DE)
(74) Vertreter: Patentanwälte Bauer Vorberg Kayser

(56) Entgegenhaltungen:
- US-A1- 2004 158 650
- US-A1- 2005 053 095
- US-A1- 2015 199 287
- US-A1- 2020 320 028
- AMS AG: "AS3911B", 23 November 2015 (2015-11-23), XP055344085, Retrieved from the Internet <URL:http://www.pmt-fl.com/downloads/wireless-connectivity/AS3911B_Datasheet_EN_v4.pdf> [retrieved on 20170209]

## Beschreibung

Die vorliegende Erfindung betrifft ein Verfahren zur Datenübertragung zwischen einer integrierten Schaltung und einer Auswerteeinheit gemäß dem Oberbegriff des Patentanspruchs 1, die Verwendung eines solchen Verfahrens zur Datenübertragung zwischen einer integrierten Schaltung und Auswerteeinheit gemäß dem Oberbegriff des Patentanspruchs 9 sowie eine Schaltungsanordnung gemäß Patenanspruch 11.

Grundsätzlich sind aus dem Stand der Technik verschiedene Verfahren zur Datenübertragung zwischen integrierten Schaltungen und nachgeschalteten Schaltungen bekannt.

Bspw. gibt es für sogenannte NFC-Tags Schreib-Befehle, mittels derer von der NFC-Schaltung des NFC-Tags empfangene Daten an eine nachgeschaltete Schaltung weitergegeben werden, bspw. um einen Speicher zu beschreiben.

Es gibt aber Systeme, die diesen Schreib-Befehl möglicherweise nicht unterstützen. Dies kann entweder auf Seiten eines Senders der NFC-Verbindung oder bei der verwendeten NFC-Schaltung der Fall sein. Dies wird als nachteilig empfunden.

Aus dem Stand der Technik ist es ferner bekannt, mit dem Interrupt-Pin einer integrierten Schaltung, welcher beispielsweise eine Schnittstelle oder eine andere Datenquelle überwacht, gezielt Ereignisse erkenntlich zu machen. Abhängig von der integrierten Schaltung können verschiedene Gründe für ein Änderung/Auslösen eines Interrupt-Signales zugrunde liegen. Diese von der integrierten Schaltung erzeugten Interrupt-Signale können unterschiedliche Formen und Dauer aufweisen. Bspw. kann als Interrupt-Signal ein dauerhafter Pegelwechsel oder die Erzeugung eines Impulses genutzt werden. Auch eine Zeitdauer des erzeugten Impulses oder eine Widerholrate der Impulse kann variieren.

Diese von integrierten Schaltungen erzeugten Signale dienen aber immer lediglich der Signalisierung eines gewünschten Ereignisses. Dies können Ereignisse wie "WakeUp", "Buffer full/empty" usw. sein.

Eine Datenübertragung ist damit nicht möglich.

Weiterer Stand der Technik ist aus der US 2004/0158650 A1 sowie aus dem Datenblatt ams Datasheet 2014-Jun-12 [v1-08] für den Integrierten Schaltkreis AS3911B NFC Initiator / HF Reader IC bekannt.

US 2015/199287 A1 offenbart Interruptsignale mit variablen Pulsweite.

Der vorliegenden Erfindung liegt damit die Aufgabe zugrunde, ein Verfahren zur Datenübertragung zwischen einer integrierten Schaltung und einer mit einem Interrupt-Pin der integrierten Schaltung verbundenen Auswerteeinheit weiter zu bilden. Eine weitere Aufgabe ist es, die Verwendung eines Verfahrens gemäß einem der vorhergehenden Ansprüche, zur Datenübertragung zwischen einer integrierten Schaltung und einer mit einem Interrupt-Pin der integrierten Schaltung verbundenen Auswerteeinheit zur Verfügung zu stellen sowie eine Schaltungsanordnung mit einer integrierten Schaltung, die als NFC-Schaltung ausgebildet ist, und einer Auswerteeinheit, die zweigeteilt als Logikeinheit und Mikrocontroller ausgebildet ist, anzugeben.

Diese Aufgaben werden durch ein Verfahren mit den Merkmalen des Patentanspruchs 1, die Verwendung dieses Verfahrens gemäß Patentanspruch 9 sowie eine Schaltungsanordnung gemäß Patentanspruch 11 gelöst.

Ein erfindungsgemäßes Verfahren zur Datenübertragung zwischen einer integrierten Schaltung und einer mit einem Interrupt-Pin der integrierten Schaltung verbundenen Auswerteeinheit, zeichnet sich dadurch aus, dass die Datenübertragung, das heißt die Übermittlung frei wählbarer Daten von der integrierten Schaltung zu der Auswerteeinheit, durch gezielte Auslösung eines atypischen Interruptsignals oder einer Mehrzahl von Interruptsignalen zusammengesetzt aus regulären und/oder atypischen Interruptsignalen erfolgt.

Dadurch, dass die Datenübertragung durch das gezielte Auslösen eines atypischen Interruptsignals oder einer Mehrzahl von Interruptsignalen zusammengesetzt aus regulären und/oder atypischen Interruptsignalen erfolgt, können Daten von der integrierten Schaltung auch dann übertragen werden, wenn dies durch die integrierte Schaltung selbst eigentlich nicht vorgesehen ist, oder von einer mit der integrierten Schaltung kommunizierenden Dritten Komponente nicht unterstützt wird.

Unter Datenübertragung gemäß der vorliegenden Erfindung soll die Übermittlung frei wählbarer Daten von der integrierten Schaltung zu der Auswerteeinheit verstanden werden. Die bloße Signalisierung eines vorbestimmten Zustandes oder Ereignisses stellt keine Datenübertragung in diesem Sinne dar.

In der vorliegenden Anmeldung werden reguläre Interrupts und atypische Interrupts unterschieden. Ein regulärer Interrupt ist ein Signal, das - abhängig von der jeweiligen integrierten Schaltung - eine vorgegebene Form und Dauer aufweist. Ein atypisches Interruptsignal unterscheidet sich in Form und Dauer von einem regulären Interruptsignal. Eine Mehrzahl von Interruptsignalen zusammengesetzt aus regulären und/oder atypischen Interruptsignalen ist eine Folge von regulären Interruptsignalen oder eine Folge von regulären und atypischen Interruptsignalen.

Durch die Nutzung des Interruptausgangs einer integrierten Schaltung können damit gezielt weitere Informationen an die Auswerteeinheit, die andere Komponenten wie bspw. Mikrocontroller oder feldprogammierbare Gatterschaltungen (Field Programmable Gate Array, FPGA) umfassen kann, übermittelt werden. Durch gezieltes Erzeugen dieser Interrupts, welche durch die Auswerteeinheit ausgewertet werden, können gezielt Daten übertragen werden. Diese gezielt erzeugten Interrupts sind am Interrupt-Pin als "Muster" bzw. "Sequenzen" erkennbar.

Das vorliegende Verfahren kann bspw. für die Kommunikation zwischen einer Datenquelle und einer als Mikrocontroller ausgebildeten Auswerteeinheit genutzt werden. Die Datenquelle kann dabei bspw. ein Mobiltelefon sein, das mit der integrierten Schaltung, die bspw. eine NFC-Schaltung sein kann, nur über Lesezugriffe kommunizieren kann. Durch einen entsprechenden Lesezugriff wird ein Interrupt-signal der integrierten Schaltung erzeugt und an den Mikrocontroller übermittelt. Werden nun gemäß der vorliegenden Ausgestaltung durch mehrere Lesezugriffe in Folge mehrere Interruptsignale in Folge ausgelöst, so ist es bei einer entsprechenden Ausgestaltung der Folge möglich, auf diese Weise Informationen von der dem Mobiltelefon über die integrierte Schaltung auf den Mikrocontroller zu übertragen, obwohl die Verbindung zwischen Mobiltelefon und integrierter Schaltung und/oder die Verbindung zwischen integrierter Schaltung und Mikrocontroller ursprünglich nicht dafür ausgelegt ist.

Die atypischen Interruptsignale weisen erfindungsgemäß eine zu einem regulären Interruptsignal unterschiedliche Dauer auf, wobei damit insbesondere eine gesamte Dauer des Interruptsignals oder die Dauer, mit der ein veränderter Pegel anliegt, gemeint ist. Durch die Verwendung atypischer Interruptsignale kann eine gute Unterscheidbarkeit regulärer Interrupts und der Datenübertragung erreicht werden. Es kann damit sichergestellt werden, dass eine Reihe regulärer Interrupts nicht mit einer Datenübertragung verwechselt wird.

Die Mehrzahl von Interruptsignalen ist erfindungsgemäß als eine Sequenz regulärer und/oder atypischer Interruptsignale ausgebildet. Eine Sequenz ist eine Folge von aufeinander folgenden Signalen. Durch unterschiedliche Sequenzen können unterschiedliche Informationen übermittelt werden. Die Sequenzen können sich durch die Zahl und Dauer der Interruptsignale und/oder die Dauer der zwischen den Interruptsignalen liegenden Abstände unterscheiden. Werden atypische Interruptsignale verwendet, kann sowohl die Dauer der Interruptsignale als auch die Dauer der zwischen den Interruptsignalen liegenden Abstände variieren.

Alternativ kann die Sequenz als eine Abfolge von Interruptsignalen mit unterschiedlichen Abständen zwischen den Interruptsignalen ausgebildet sein. Das bedeutet, dass bei der Verwendung einer Mehrzahl regulärer Interruptsignale die Zeitdauer zwischen je zwei aufeinanderfolgenden Interruptsignalen variieren kann.

Erfindungsgemäß befindet sich die Auswerteeinheit in einem Sleep-Modus, aus dem sie mittels des atypischen Interruptsignals oder der Mehrzahl von Interruptsignalen zusammengesetzt aus regulären und/oder atypischen Interruptsignalen reaktiviert wird.

Auf diese Weise kann im regulären Betrieb durch den Sleep-Modus der Auswerteeinheit Energie gespart werden. Der Sleep-Modus ist derart ausgestaltet, dass eine Vielzahl der Funktionen der Auswerteeinheit deaktiviert sind und nur ein Teil der Auswerteeinheit, der auf ein erstes atypisches Interruptsignal oder eine erste Folge von Interruptsignalen reagiert, aktiviert bleibt. Dieser Teil ist derart ausgestaltet, dass er den Rest der Auswerteeinheit aufwecken, d. h. aus dem Sleep-Modus reaktivieren kann.

Die Auswerteeinheit ist erfindungsgemäß zweigeteilt als eine Logikeinheit und ein Mikrocontroller ausgebildet, wobei sowohl die Logikeinheit als auch der Mikrocontroller mit dem Interrupt-Pin verbunden ist und die Logikeinheit den Mikrocontroller, wenn sie ein atypisches Interruptsignal oder eine vorbestimmte Folge von Interruptsignalen empfängt, aktiviert und der Mikrocontroller weitere Interruptsignale auswertet und so die Datenübertragung erfolgt.

Durch eine derartige Aufteilung der Auswerteeinheit kann ein besonders energieeffizienter Sleep-Modus der Auswerteeinheit erreicht werden, bei dem der Mikrocontroller vollständig deaktiviert sein kann und von der Logikeinheit, bspw. einer feldprogrammierbaren Gatterschaltung (FPGA) nur im Bedarfsfall, also wenn diese ein atypisches Interruptsignal oder eine vorbestimmte Folge von Interruptsignalen empfängt, aktiviert wird. Auf diese Weise lässt sich noch mehr Energie als bei einem Mikrocontroller im Sleep-Modus einsparen, da der Mikrocontroller vollständig deaktiviert sein kann und nur die sehr energiesparsame feldprogrammierbare Gatterschaltung aktiviert sein muss.

Um die Energieeffizienz des Verfahrens noch weiter zu steigern, ist es vorteilhaft, wenn die Auswerteeinheit nach einer vorgegebenen Zeit oder nach einem vorgegebenen Signal wieder in den Sleep-Modus geht. Das bedeutet, dass - je nach Ausgestaltung der zugrundeliegenden Schaltung - der Mikrocontroller selbst in den Sleep-Modus geht, oder bei einer zweigeteilten Auswerteeinheit der Mikrocontroller deaktiviert wird und die feldprogrammierbare Gatterschaltung (FPGA), nicht.

Die Interruptsignale für das Verfahren zur Datenübertragung können bspw. durch ein Auslesen von Daten aus der integrierten Schaltung erzeugt werden. Das Auslesen der Daten kann blockweise erfolgen.

Die Daten können von einer mit der integrierten Schaltung drahtlos verbundenen Datenquelle stammen, die bspw. als mobiles Endgerät, insbesondere Mobiltelefon, ausgebildet sein kann. Die Datenquelle kann die Interruptsignale dann durch gezieltes Lesen von Daten auslösen und so Daten an die integrierte Schaltung und die nachgeschaltete Auswerteeinheit übermitteln.

Durch die Verwendung eines Lesevorgangs zur Erzeugung der Interruptsignale kann bei Schaltungsanordnungen, die einen Schreibbefehl nicht unterstützen dennoch ein Schreibvorgang, respektive eine Datenübertragung erreicht werden.

Durch die Datenübertragung kann also bspw. ein Speicher beschrieben werden. Es kann aber auch eine Vielzahl anderer Informationen auf diese Weise übermittelt werden.

Ein Rückkanal, also eine Datenübertragung von der Auswerteeinheit zu der integrierten Schaltung kann dadurch erreicht werden, dass die Auswerteeinheit einen Speicher der integrierten Schaltung beschreibt. Dieser Speicher kann von einer Dritten Einheit wieder ausgelesen und so die in den Speicher geschriebene Information verfügbar gemacht werden.

Das vorstehend beschriebene Verfahren kann vorzugsweise zur Datenübertragung zwischen einer integrierten Schaltung und einer mit einem Interrupt-Pin der integrierten Schaltung verbundenen Auswerteeinheit verwendet werden.

Für diese Verwendung ist die integrierte Schaltung vorzugsweise als NFC-Schaltung und die Auswerteeinheit als Mikrocontroller oder als feldprogrammierbare Gatterschaltung (FPGA) mit einem Mikrocontroller ausgebildet.

Eine erfindungsgemäße Schaltungsanordnung weist eine integrierte Schaltung, die als NFC-Schaltung ausgebildet ist, und einer Auswerteeinheit, die zweigeteilt als Logikeinheit und Mikrocontroller ausgebildet ist, auf, wobei die Logikeinheit und der Mikrocontroller mittelbar oder unmittelbar mit einem Interrupt-Pin der integrierten Schaltung verbunden sind und ein Ausgang der Logikeinheit mit einem Eingang des Mikrocontrollers verbunden ist.

Durch eine derartige Ausgestaltung der Schaltungsanordnung kann für eine NFC-Schaltung, die einen Schreibbefehl nicht unterstützt oder für Lesegeräte, die einen Schreibbefehl nicht unterstützen dennoch ein Schreibbefehl ermöglicht werden.

In einer Ausgestaltungsform ist sowohl die Logikeinheit als auch der Mikrocontroller unmittelbar mit dem Interrupt-Pin verbunden ist.

Zusätzlich kann die Logikeinheit einen Zwischenspeicher zur Speicherung einer Sequenz von Interruptsignalen aufweisen.

Auf diese Weise kann die Sequenz von Interruptsignalen in dem Zwischenspeicher zwischengespeichert und, falls der Mikrocontroller nicht schnell genug aus einem Sleep-Modus in einen aktiven Betriebszustand überführt wird, oder aus anderen Gründen ein unmittelbarer Empfang der Sequenz von Interruptsignalen unvollständig oder gestört war, von dem Mikrocontroller erneut abgerufen werden. Alternativ kann hierdurch eine Redundanz für die Übermittlung der Daten geschaffen werden.

Die vorliegende Erfindung wird nachfolgend anhand von Ausführungsbeispielen unter Bezugnahme auf die beigefügten Figuren eingehend erläutert. Es zeigen:
- Figur 1: ein erstes Ausführungsbeispiel einer Schaltungsanordnung, bei der das Verfahren gemäß der vorliegenden Anmeldung zum Einsatz kommen kann,
- Figur 2: ein zweites Ausführungsbeispiel einer Schaltungsanordnung, bei der das Verfahren gemäß der vorliegenden Anmeldung zum Einsatz kommen kann,
- Figur 3: in den Teilfiguren a) bis c) eine reguläres Interruptsignal, ein atypisches Interruptsignal und eine Sequenz von regulären Interruptsignalen,
- Figur 4: vereinfacht einen möglichen Verfahrensablauf und
- Figur 5: einen Verfahrensablauf, wie er bei der Schaltungsanordnung gemäß Figur 2 zum Einsatz kommt.

In den Figuren bezeichnen - soweit nicht anders angegeben - gleiche Bezugszeichen gleiche oder einander entsprechende Komponenten mit gleicher Funktion.

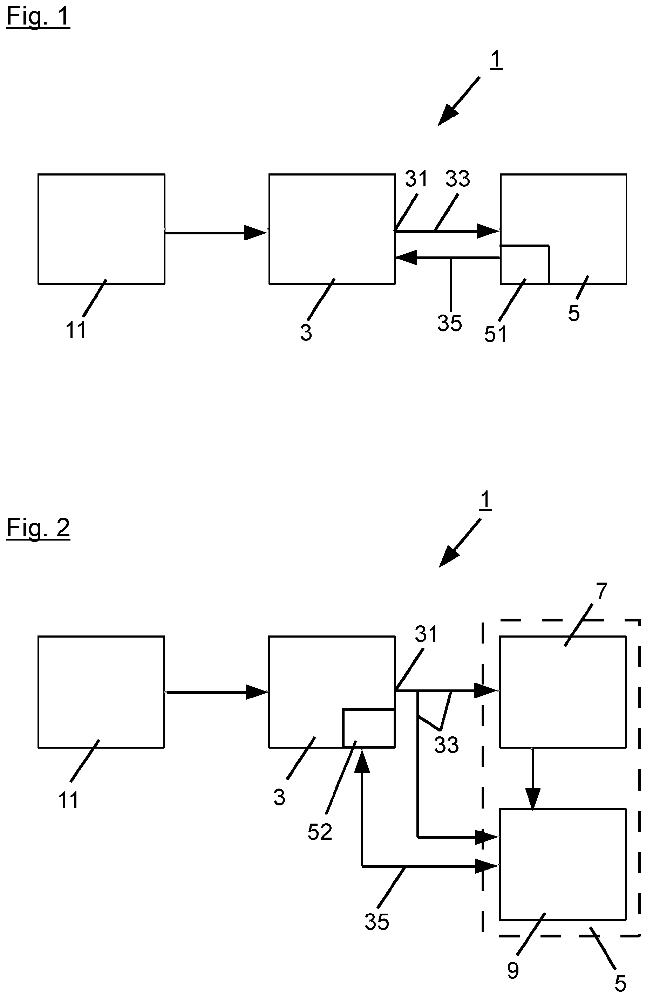

Figur 1 zeigt ein erstes Ausführungsbeispiel einer Schaltungsanordnung 1 bei der das Verfahren gemäß der vorliegenden Anmeldung zum Einsatz kommen kann.

Die Schaltungsanordnung 1 gemäß Figur 1 weist eine integrierte Schaltung 3 auf, deren Interrupt-Pin 31 über eine Interrupt Leitung 33 mit einer Auswerteeinheit 5 verbunden ist. Die Auswerteeinheit 5 ist der integrierten Schaltung 3 ferner über eine Datenleitung 35 verbunden, über die die integrierte Schaltung 3 Daten aus einem Speicher 51 der Auswerteeinheit 5 auslesen kann. Im vorliegenden Ausführungsbeispiel ist die Datenleitung 35 unidirektionale ausgebildet, d. h., dass die integrierte Schaltung 3 zwar Daten aus dem Speicher 51 der Auswerteeinheit 5 auslesen, die in dem Speicher 51 abgelegten Daten über die Datenleitung 35 jedoch nicht verändern kann.

In dem in Figur 1 dargestellten Ausführungsbeispiel ist mit der integrierten Schaltung 3 ferner eine Datenquelle 11 verbunden, auf der Daten gespeichert sind, die in den Speicher 51 der Auswerteeinheit 5 übertragen werden sollen.

Die Datenquelle 11 ist mit der integrierten Schaltung 3 über eine Funkverbindung der Nahfeld Kommunikation (NFC) verbunden.

Durch das gezielte Senden von Lesebefehlen an die integrierte Schaltung 3 werden bei dieser gezielt Interruptsignale erzeugt, die ausgangsseitig an dem Interrupt Pin 31 anstehen. Da die Auswerteeinheit 5 über die Interruptleitung 33 mit diesem Interrupt Pin 31 verbunden ist, kann diese die so entstehende Folge von Interruptsignalen abgreifen und auswerten. Auf diese Weise können sowohl durch eine geeignet vereinbarte Kodierung, die sowohl der Datenquelle 11 als auch der Auswerteeinheit 5 bekannt sein muss, Daten von der Datenquelle 11 zu der Auswerteeinheit 5 übertragen und beispielsweise dort im Speicher 51 abgelegt werden.

Figur 2 zeigt ein zweites Ausführungsbeispiel einer Schaltungsanordnung 1, bei der das Verfahren gemäß der vorliegenden Anmeldung zum Einsatz kommen kann.

Im Unterschied zu der in Figur 1 gezeigten Schaltungsanordnung ist bei dem Ausführungsbeispiel der Figur 2 die Auswerteeinheit 5 durch eine Logikeinheit 7 und einen Mikrocontroller 9 gebildet, wobei sowohl die Logikeinheit 7 als auch der Mikrocontroller 9 über eine Interrupt Leitung 33 mit dem Interrupt Pin 31 der integrierten Schaltung 3 verbunden sind.

Im vorliegenden Ausführungsbeispiel ist die Datenleitung 35 zwischen der integrierten Schaltung 3 und dem Mikrocontroller 9 ausgebildet und würde grundsätzlich eine bidirektionale Kommunikation zwischen der integrierten Schaltung 3 und der Mikrocontroller 9 unterstützen.

In dem in Figur 2 dargestellten Ausführungsbeispiel unterstützt aber die Datenquelle 11 lediglich Lesebefehle für die zwischen der Datenquelle 11 und der integrierten Schaltung 3 ausgebildeten NFC-Verbindung, sodass eine Datenübertragung von der Datenquelle 11 zu der Auswerteeinheit 5 auch in diesem Ausführungsbeispiel durch das gezielte Ausführen von Lesebefehlen, dass daraus resultierende Auslösen von Interruptsignalen sowie die Auswertung dieser Interruptsignale durch die Auswerteeinheit 5 erfolgt.

Ein in der integrierten Schaltung 3 vorhandener Speicher 52 kann durch die Auswerteeinheit 5 frei geändert, das bedeutet insbesondere ausgelesen und beschrieben werden. Diese Daten bzw. die Änderung der Daten kann durch die Datenquelle 11 erfasst werden, wodurch eine Rückantwort zustande kommt. Hierdurch ist es möglich fehlerhafte Interruptsignale bzw. Sequenzen zu überprüfen.

Die zweigeteilte Ausgestaltung der Auswerteeinheit 5 durch eine Logikeinheit 7 und einen Mikrocontroller 9 bringt den Vorteil, dass der Mikrocontroller zu Zeiten, in denen keine Datenübertragung stattfindet, deaktiviert sein kann, während die Logikeinheit 7, die beispielsweise als feldprogrammierbare Gatterschaltung (FPGA) ausgestaltet sein kann, die Interruptleitung 33 auf Interrupts überwacht und den Mikrocontroller nur im Bedarfsfall aktiviert.

Um weitere Energie zu sparen geht der Mikrocontroller 9 nach einer vorgebbaren Zeit ohne Datenübertragung wieder in einen deaktivierten Zustand, sodass dann wieder lediglich die Logikeinheit 7 zur Überwachung der Interruptleitung 33 mit Energie versorgt werden muss. Bei Auftreten eines Interrupt-Signals überführt die Logikeinheit 7 den Mikrocontroller 9 in den aktiven Zustand, sodass dieser eine Auswertung der Interruptsignale vornehmen kann.

Es kann ferner vorgesehen sein, dass das Interruptsignal von der Integrierten Schaltung 3 dem Mikrocontroller 9 über die Logikeinheit zugeführt wird, d.h. dass keine unmittelbare Verbindung des Mikrocontrollers 9 zu dem Interrupt Pin 31 der integrierten Schaltung 3 besteht.

Zusätzlich oder alternativ kann zwischen der Logikeinheit 7 und dem Mikrocontroller 9 eine Datenleitung bestehen. Ferner kann die Logikeinheit 7 einen Zwischenspeicher aufweisen, in dem die an dem Interrupt-Pin 31 anliegende Information zwischengespeichert wird. Ist ein Start des Mikrocontrollers 9 auf ein erstes Interruptsignal hin zu langsam, sodass dieser bspw. eine Sequenz von Interruptsignalen nicht vollständig erfassen kann, so kann die Sequenz aus dem Zwischenspeicher abgerufen und dem Mikrocontroller 9 nochmals zugeführt werden.

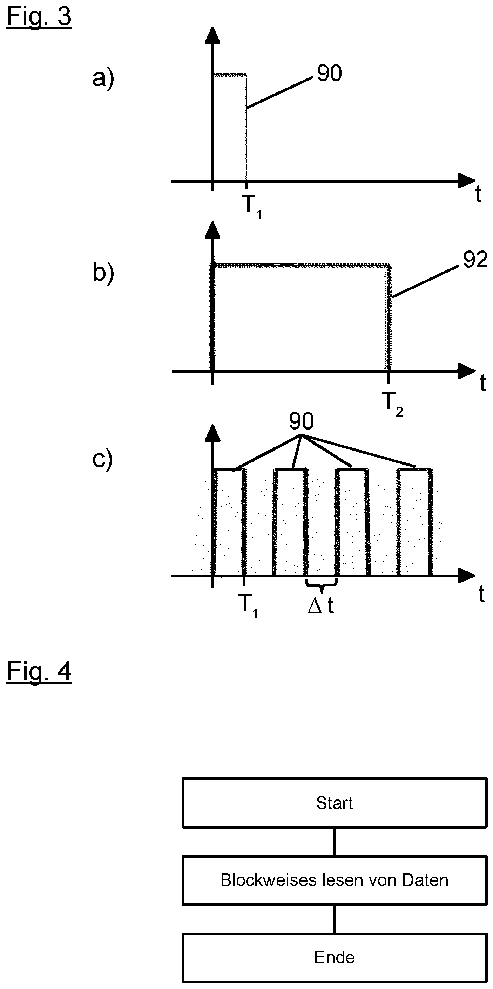

Figur 3 zeigt in den Teilfiguren a) bis c) unterschiedliche Interruptsignale. In Figur 3a) ist ein reguläres Interrupt Signal 90 gezeigt, dass als Rechtecksignal mit einer Periodendauer T1 realisiert ist. Solche regulären Interruptsignale in 90 sind aus dem Stand der Technik bereits bekannt.

In Figur 3b) ist ein atypisches Interrupt Signal 92 dargestellt. Das atypische Interruptsignal 92 weist in dem vorliegend gezeigten Ausführungsbeispiel eine Signaldauer T2 auf, die ein Vielfaches der Signallänge T1 eines regulären Interrupt Signals 90 aufweist. Diese Unterschiede in der Signallänge zwischen einem regulären Interrupt Signal 90 und einem atypischen Interrupt Signal 92 kann von der Auswerteeinheit 5 erkannt und so eine Datenübertragung genutzt werden.

In Figur 3c) ist eine Sequenz von irregulären Interruptsignalen 90 dargestellt. Die hier gezeigten, irregulären Interruptsignale 90 weisen jeweils eine Signallänge T1 sowie einen Signalabstand Δ t auf. Durch eine Mehrzahl unterschiedlicher Folgen, die beispielsweise aus regulären Interruptsignalen 90 und atypischen Interruptsignalen 92 gemischt sein kann und/oder deren Interruptsignale unterschiedliche Signalabstände Δ t aufweisen können kann besonders effektiv eine Datenübertragung von einer Datenquelle 11 über eine integrierte Schaltung 3 zu einer Auswerteeinheit 5 erfolgen.

In den vorgenannten Ausführungsbeispielen ist die Datenquelle jeweils als Mobiltelefon mit einer NFC-Schnittstelle, die integrierte Schaltung als ein NFC-Schaltkreis, die auf einem NFC-Chip angeordnet ist ausgebildet.

In Figur 4 ist ein vereinfachter Verfahrensablauf eines Verfahrens gemäß der vorliegenden Anmeldung gezeigt.

Nach dem Start des Verfahrens wird durch blockweises Lesen von Daten über die integrierte Schaltung 3 eine Datenübertragung durch eine Folge von Interruptsignalen etabliert. Dieses Lesen kann den Speicher 51 oder 52 auslesen, wodurch ein Rückkanal etabliert ist. Nach Abschluss der Datenübertragung ist das Verfahren beendet.

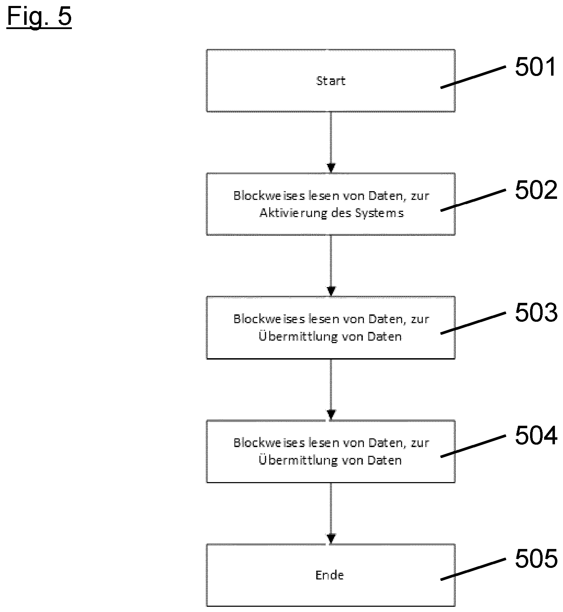

In Figur 5 wird ein ausführlicher Verfahrensablauf eines Verfahrens gemäß der vorliegenden Anmeldung gezeigt, wie es bei der in Figur 2 dargestellten Schaltungsanordnung zum Einsatz kommen kann.

Die Datenquelle 11, welches ein Smartphone sein kann, kommuniziert durch eine drahtlose Datenleitung 36, bspw. eine NFC Funkverbindung mit der integrierten Schaltung 3, einem NFC-Chip.

In einem ersten Schritt 501 startet das Verfahren, die Auswerteeinheit 5 befindet sich im Sleep-Modus. In einem zweiten Schritt 502 liest die Datenquelle über die drahtlose Datenleitung 36 blockweise Daten aus der integrierten Schaltung 3 aus. Dieses blockweise Lesen erzeugt auf der Interrupt-Leitung 33 ein atypisches Interruptsignal 92. Durch dieses wird die Auswerteeinheit 5 aktiviert. In einem dritten Schritt 503 kann die Datenquelle 11 Daten über die drahtlose Datenleitung 36 und die integrierte Schaltung 3 an die Auswerteeinheit 5 übermitteln. Hierzu können verschiedene Sequenzen von Interruptsignalen 90 und/oder atypische Interruptsignale 92 genutzt werden. Das hierzu benötigte blockweise Auslesen von Daten kann in einem vierten Schritt 504 gleichzeitig als Rückkanal der Auswerteeinheit 5 zur Datenquelle 11 genutzt werden. In einem fünften Schritt 505 ist das Verfahren beendet und die Auswerteeinheit 5 geht wieder in einen Betriebsmodus mit reduziertem Energieverbrauch.

### Bezugszeichenliste

- 1: Schaltungsanordnung
- 3: integrierte Schaltung
- 5: Auswerteeinheit
- 7: Logikeinheit
- 9: Mikrocontroller
- 11: Datenquelle

- 31: Interrupt-Pin
- 33: Interrupt-Leitung
- 35: Datenleitung
- 36: Drahtlose-Datenleitung

- 51: Speicher
- 52: Speicher

- 90: reguläres Interruptsignal
- 92: atypisches Interruptsignal

- t: Zeit

- T₁: Dauer
- T₂: Dauer

- Δ t: Abstand

## Patentansprüche

1. Verfahren zur Datenübertragung zwischen einer integrierten Schaltung (3) und einer mit einem Interrupt-Pin (31) der integrierten Schaltung (3) verbundenen Auswerteeinheit (5),
wobei die Datenübertragung, das heißt die Übermittlung frei wählbarer Daten von der integrierten Schaltung zu der Auswerteeinheit, durch gezielte Auslösung eines atypischen Interruptsignals (92) oder einer Mehrzahl von Interruptsignalen (90, 92) zusammengesetzt aus regulären und/oder atypischen Interruptsignalen (90, 92) erfolgt, wobei das oder die atypischen Interruptsignale (92) eine zu einem regulären Interruptsignal (90) unterschiedliche Dauer (T₁, T₂) aufweisen und die Mehrzahl von Interruptsignalen als eine Sequenz regulärer Interruptsignale (90) und/oder atypischer Interruptsignale (92) ausgebildet ist, **dadurch gekennzeichnet, dass** sich die Auswerteeinheit (5) in einem Sleep-Modus befindet, aus dem sie mittels des atypischen Interruptsignals (92) oder der Mehrzahl von Interruptsignalen zusammengesetzt aus regulären Interruptsignalen (90) und/oder atypischen Interruptsignalen (92) reaktiviert wird, wobei die Auswerteeinheit (5) zweigeteilt als eine Logikeinheit (7) und ein Mikrocontroller (9) ausgebildet ist, wobei sowohl die Logikeinheit (7) als auch der Mikrocontroller (9) mit einem Interrupt-Pin (31) verbunden sind und die Logikeinheit (7) den Mikrocontroller (9), wenn sie ein atypisches Interrupt-signal (92) über den Interrupt-Pin empfängt, aktiviert und der Mikrocontroller (9) weitere Interruptsignale (90, 92) über den Interrupt-Pin auswertet und so die Datenübertragung über den Interrupt-Pin erfolgt.

2. Verfahren gemäß Anspruch 1,
**dadurch gekennzeichnet, dass**
die Sequenz als eine Abfolge von Interruptsignalen (90, 92) mit unterschiedlichen Abständen (Δ T) zwischen den Interruptsignalen (90, 92) ausgebildet ist.

3. Verfahren gemäß einem der vorhergehenden Ansprüche,
**dadurch gekennzeichnet, dass**
die Auswerteeinheit (5) nach einer vorgegebenen Zeit (t) oder nach einem vorgegebenen Signal wieder in den Sleep-Modus geht.

4. Verfahren gemäß einem der vorhergehenden Ansprüche,
**dadurch gekennzeichnet, dass**
das oder die Interruptsignale (90, 92) durch ein Auslesen von Daten aus der integrierten Schaltung (3) erzeugt werden.

5. Verfahren gemäß Anspruch 4,
**dadurch gekennzeichnet, dass**
das Auslesen der Daten blockweise erfolgt.

6. Verfahren gemäß einem der vorhergehenden Ansprüche,
**dadurch gekennzeichnet, dass**
durch die Datenübertragung ein Speicher (51) beschrieben wird.

7. Verfahren gemäß einem der vorhergehenden Ansprüche,
**dadurch gekennzeichnet, dass**
die Auswerteeinheit (5) einen Speicher (51 oder 52) der integrierten Schaltung (3) beschreibt und so ein Rückkanal ausgebildet wird.

8. Verfahren gemäß einem der vorhergehenden Ansprüche,
**dadurch gekennzeichnet, dass**
die Daten von einem mit der integrierten Schaltung (3) drahtlos verbundenen Datenquelle (11) stammen.

9. Verwendung eines Verfahrens gemäß einem der vorhergehenden Ansprüche, zur Datenübertragung, das heißt die Übermittlung frei wählbarer Daten, zwischen einer integrierten Schaltung (3) und einer mit einem Interrupt-Pin (31) der integrierten Schaltung (3) verbundenen Auswerteeinheit (5).

10. Verwendung gemäß Patentanspruch 9,
**dadurch gekennzeichnet, dass**
die integrierte Schaltung (3) als NFC-Schaltung und die Auswerteeinheit (5) als FPGA oder Mikrocontroller (9) ausgebildet ist.

11. Schaltungsanordnung (1) zur Ausführung eines Verfahrens gemäß einem der Patentansprüche 1 bis 8 mit einer integrierten Schaltung (3), die als NFC-Schaltung ausgebildet ist, und einer Auswerteeinheit (5), die zweigeteilt als Logikeinheit (7) und Mikrocontroller (9) ausgebildet ist, wobei die Logikeinheit (7) und der Mikrocontroller (9) unmittelbar oder mittelbar mit einem Interrupt-Pin (31) der integrierten Schaltung (3) verbunden sind und ein Ausgang der Logikeinheit (7) mit einem Eingang des Mikrocontrollers (9) verbunden ist.

12. Schaltungsanordnung (1) gemäß Patentanspruch 11,
**dadurch gekennzeichnet, dass**
sowohl die Logikeinheit (7) als auch der Mikrocontroller (9) unmittelbar mit dem Interrupt-Pin (31) verbunden ist.

13. Schaltungsanordnung (1) gemäß einem der Patentansprüche 11 oder 12,
**dadurch gekennzeichnet, dass**
die Logikeinheit (7) einen Zwischenspeicher zur Speicherung einer Sequenz von Interruptsignalen aufweist.

## Claims

1. Method for data transmission between an integrated circuit (3) and an evaluation unit (5) connected to an interrupt pin (31) of the integrated circuit (3), wherein the data transmission, that is, the transmission of freely selectable data from the integrated circuit to the evaluation unit takes place by selectively triggering an atypical interrupt signal (92) or a plurality of interrupt signals (90, 92), composed of regular and/or atypical interrupt signals (90, 92), wherein the atypical interrupt signal(s) (92) has (have) a different duration (T₁, T₂) compared to a regular interrupt signal (90), and the plurality of interrupt signals are in the form of a sequence of regular interrupt signals (90) and/or atypical interrupt signals (92), **characterised in that** the evaluation unit (5) is in a sleep mode, from which it is reactivated by means of the atypical interrupt signal (92) or the plurality of interrupt signals, composed of regular interrupt signals (90) and/or atypical interrupt signals (92), wherein the evaluation unit (5) is designed in two parts as a logic unit (7) and a microcontroller (9), wherein both the logic unit (7) and the microcontroller (9) are connected with an interrupt pin (31) and the logic unit (7) activates the microcontroller (9) when it receives an atypical interrupt signal (92) via the interrupt pin, and the microcontroller (9) evaluates further interrupt signals (90, 92) via the interrupt pin, and thus data transmission takes place via the interrupt pin.

2. Method according to claim 1,
**characterised in that**
the sequence is in the form of a series of interrupt signals (90, 92) with different intervals (ΔT) between the interrupt signals (90, 92).

3. Method according to any one of the preceding claims,
**characterised in that**
the evaluation unit (5) returns to the sleep mode after a predefined time (t) or after a predefined signal.

4. Method according to any one of the preceding claims,
**characterised in that**
the interrupt signal(s) (90, 92) is (are) generated by reading data from the integrated circuit (3).

5. Method according to claim 4,
**characterised in that**
the data is read out in a blockwise manner.

6. Method according to any one of the preceding claims,
**characterised in that**
a memory (51) is written by the data transmission.

7. Method according to any one of the preceding claims,
**characterised in that**
the evaluation unit (5) writes a memory (51 or 52) of the integrated circuit (3) and thus a return channel is formed.

8. Method according to any one of the preceding claims,
**characterised in that**
the data originates from a data source (11) wirelessly connected to the integrated circuit (3).

9. Use of a method according to any one of the preceding claims, for data transmission, that is, the transmission of freely selectable data, between an integrated circuit (3) and an evaluation unit (5) connected to an interrupt pin (31) of the integrated circuit (3).

10. Use according to claim 9,
**characterised in that**
the integrated circuit (3) is in the form of an NFC circuit and the evaluation unit (5) is in the form of an FPGA or microcontroller (9).

11. Circuit assembly (1) for carrying out a method according to any one of claims 1 to 8, with an integrated circuit (3) that is in the form of an NFC circuit, and an evaluation unit (5) that is designed in two parts as a logic unit (7) and a microcontroller (9), wherein the logic unit (7) and the microcontroller (9) are directly or indirectly connected to an interrupt pin (31) of the integrated circuit (3) and an output of the logic unit (7) is connected to an input of the microcontroller (9).

12. Circuit assembly (1) according to claim 11,
**characterised in that**
both the logic unit (7) and the microcontroller (9) are directly connected to the interrupt pin (31).

13. Circuit assembly (1) according to any one of claims 11 or 12,
**characterised in that**
the logic unit (7) has a buffer for storing a sequence of interrupt signals.

## Revendications

1. Procédé de transfert de données entre un circuit intégré (3) et une unité d'évaluation (5) connectée à une broche d'interruption (31) du circuit intégré (3),
dans lequel le transfert de données, c'est-à-dire la transmission de données librement sélectionnables du circuit intégré à l'unité d'évaluation, est effectué par déclenchement ciblé d'un signal d'interruption atypique (92) ou d'une pluralité de signaux d'interruption (90, 92) composés de signaux d'interruption réguliers et/ou atypiques (90, 92), dans lequel le ou les signaux d'interruption atypiques (92) présentent une durée (T₁, T₂) différente de celle d'un signal d'interruption régulier (90), et la pluralité de signaux d'interruption est réalisée sous la forme d'une séquence de signaux d'interruption réguliers (90) et/ou de signaux d'interruption atypiques (92), **caractérisé en ce que** l'unité d'évaluation (5) est en mode veille, à partir duquel elle est réactivée au moyen du signal d'interruption atypique (92) ou de la pluralité de signaux d'interruption composés de signaux d'interruption réguliers (90) et/ou de signaux d'interruption atypiques (92), dans lequel l'unité d'évaluation (5) est conçue en deux parties, sous forme d'une unité logique (7) et d'un microcontrôleur (9), dans lequel l'unité logique (7) et le microcontrôleur (9) sont tous deux connectés à une broche d'interruption (31), et l'unité logique (7) active le microcontrôleur (9) lorsqu'elle reçoit un signal d'interruption atypique (92) par l'intermédiaire de la broche d'interruption, et le microcontrôleur (9) analyse d'autres signaux d'interruption (90, 92) par l'intermédiaire de la broche d'interruption, et le transfert de données est ainsi effectué par l'intermédiaire de la broche d'interruption.

2. Procédé selon la revendication 1,
**caractérisé en ce que**
la séquence est conçue sous la forme d'une succession de signaux d'interruption (90, 92), avec des distances différentes (Δ T) entre les signaux d'interruption (90, 92).

3. Procédé selon l'une des revendications précédentes,
**caractérisé en ce que**
l'unité d'évaluation (5) repasse en mode veille après un temps prédéfini (t) ou après un signal prédéfini.

4. Procédé selon l'une des revendications précédentes,
**caractérisé en ce que**
le ou les signaux d'interruption (90, 92) sont générés par une lecture de données provenant du circuit intégré (3).

5. Procédé selon la revendication 4,
**caractérisé en ce que**
la lecture des données est effectuée par blocs.

6. Procédé selon l'une des revendications précédentes,
**caractérisé en ce que**
une mémoire (51) est écrite par le transfert de données.

7. Procédé selon l'une des revendications précédentes,
**caractérisé en ce que**
l'unité d'analyse (5) décrit une mémoire (51 ou 52) du circuit intégré (3) et un canal de retour est ainsi réalisé.

8. Procédé selon l'une des revendications précédentes,
**caractérisé en ce que**
les données proviennent d'une source de données (11) connectée sans fil au circuit intégré (3).

9. Utilisation d'un procédé selon l'une des revendications précédentes, pour le transfert de données, c'est-à-dire la transmission de données librement sélectionnables, entre un circuit intégré (3) et une unité d'évaluation (5) connectée à une broche d'interruption (31) du circuit intégré (3).

10. Utilisation selon la revendication 9,
**caractérisée en ce que**
le circuit intégré (3) est réalisé sous la forme d'un circuit NFC et l'unité d'évaluation (5) est réalisée sous la forme d'un FPGA ou d'un microcontrôleur (9).

11. Agencement (1) de circuit pour la mise en œuvre d'un procédé selon l'une des revendications 1 à 8, avec un circuit intégré (3) qui est réalisé sous la forme d'un circuit NFC, et une unité d'évaluation (5) qui est conçue en deux parties, sous la forme d'une unité logique (7) et d'un microcontrôleur (9), dans lequel l'unité logique (7) et le microcontrôleur (9) sont connectés directement ou indirectement à une broche d'interruption (31) du circuit intégré (3), et une sortie de l'unité logique (7) est connectée à une entrée du microcontrôleur (9).

12. Agencement (1) de circuit selon la revendication 11,
**caractérisé en ce que**
l'unité logique (7) et le microcontrôleur (9) sont tous deux directement connectés à la broche d'interruption (31).

13. Agencement (1) de circuit selon l'une des revendications 11 ou 12,
**caractérisé en ce que**
l'unité logique (7) présente une mémoire temporaire pour stocker une séquence de signaux d'interruption.
